# EUROPÄISCHE PATENTSCHRIFT

(11) **EP 1 690 758 B1**
(45) Veröffentlichungstag und Bekanntmachung des Hinweises auf die Patenterteilung: **16.05.2007**
(21) Anmeldenummer: 05002692.1
(22) Anmeldetag: 09.02.2005
(51) Int. Cl.: B60R 25/00, B60R 25/04

(54) **Verfahren zur Berechtigungsprüfung und Sicherheitssystem**
Method for verifying the authentification and security system
Procede d'authentification et système de sécurité

(43) Veröffentlichungstag der Anmeldung: 16.08.2006
(73) Patentinhaber: Delphi Technologies, Inc., Troy, MI 48007 (US)
(72) Erfinder: Langenbach, Julia, Dr., 57482 Wenden (DE)
(74) Vertreter: Manitz, Finsterwald & Partner GbR

(56) Entgegenhaltungen:
- DE-A1- 10 052 451
- DE-C1- 19 850 176

## Beschreibung

Die Erfindung betrifft ein Berechtigungsprüfverfahren und ein Sicherheitssystem zur Durchführung des Verfahrens.

In vielen Anwendungen ist es heutzutage notwendig oder wünschenswert, die Berechtigung zum Zugang oder zur Vornahme einer Handlung überprüft wird, ohne dass ein mechanischer Schlüssel eingesetzt wird. Solche "schlüsselfreien" Systeme finden insbesondere auch bei Kraftfahrzeugen Anwendung. Der Nutzer bzw. Fahrer soll Zugang zum Kraftfahrzeug erhalten und/oder den Motor erst starten können, wenn geklärt worden ist, ob er dazu berechtigt ist. Er hat dazu z.B. ein Schlüsselelement bei sich, das z.B. über Funk mit dem Kraftfahrzeug kommuniziert, um die Berechtigung des Nutzers, der im Besitz des Schlüsselelementes ist, abzuklären. Bei dem Schlüsselelement kann es sich auch um einen mechanischen Schlüssel handeln, der neben der Berechtigungsprüffunktion zusätzlich auch ein konventionelles Öffnen bzw. Starten des Motors durch Einstecken des Schlüssels ermöglicht. Auch in diesem Falle wird für den Zweck des vorliegenden Textes von "schlüsselfreier" Berechtigungsprüfung gesprochen.

Im Normalbetrieb einer schlüsselfreien Anwendung sendet entweder das Auto zu dem Schlüsselelement oder das Schlüsselelement zu dem Auto ein Signal, das von dem jeweils anderen Element geprüft wird, bevor z.B. das Öffnen der Autotür ermöglicht oder das Starten des Motors zugelassen wird. Die normale Reichweite der auszutauschenden Signale ist in der Regel auf ungefähr 2 m begrenzt, so dass das Entriegeln der Tür oder die Berechtigungsprüfung zum Starten des Motors nur durchgeführt werden kann, wenn sich das Schlüsselelement und damit der Träger des Schlüsselelements in unmittelbarer Nähe des oder in dem Kraftfahrzeug befinden.

Eine mögliche Anwendung sieht z.B. vor, dass ein Kraftfahrzeug bei Betätigung des Türgriffs ein Signal versendet, das von einem Schlüsselelement empfangen werden soll, das dann entweder ein entsprechendes Antwortsignal zurücksendet oder das empfangene Signal direkt auswertet. Dabei wird davon ausgegangen, dass sich das Schlüsselelement bei der Person befindet, die den Türgriff betätigt, z.B. in einer Jackentasche oder Handtasche. Nur wenn der Austausch und die Überprüfung der Signale ergibt, dass ein zu dem Kraftfahrzeug passendes Schlüsselelement innerhalb der Reichweite des Signals ist, wird der Zugang zu dem Kraftfahrzeug oder die Berechtigung zum Starten des Motors gewährt.

Derartige schlüsselfreie Systeme bergen Sicherheitsrisiken. Z.B. sind die Systeme anfällig gegen so genannte "Relaisstation-Attacken" (relaystation-attacks), die im folgenden anhand eines Beispiels erläutert werden. Die geschilderten Systeme sind nicht sicher gegen den Angriff eines Diebes, der die Kommunikationsstrecke zwischen Kraftfahrzeug und Schlüsselelement verlängert, ohne dass es der Träger des Schlüsselelements bemerkt.

Beispielhaft wird dazu folgende Situation geschildert. Eine berechtigte Person, z.B. der Kraftfahrzeughalter verlässt das Fahrzeug und entfernt sich zum Beispiel in ein Gebäude. Eine unberechtigte Person betätigt den Türgriff des wie geschildert ausgestalteten Fahrzeugs, das daraufhin ein Berechtigungsprüfsignal einer Frequenz von z.B. 125 kHz aussendet, das unter normalen Umständen nur eine Reichweite von etwa 2 m hat. Die unberechtigte Person trägt eine erste "Relaisstation" bei sich, die das Signal aufnimmt, ggf. verstärkt und in einen Frequenzbereich moduliert, der eine größere Reichweite gewährleistet. Ein derart verändertes Signal, das von der Relaisstation versendet wird, hat dementsprechend eine sehr viel größere Reichweite als der eigentliche Kommunikationsbereich des Berechtigungsprüfsignals, z.B. mehrere Hundert Meter. Die erste Relaisstation sendet das Signal größerer Reichweite aus. In der Nähe der berechtigten Person befindet sich zum Beispiel eine zweite unberechtigte Person, die ebenfalls eine entsprechende Relaisstation bei sich trägt. Die zweite Relaisstation empfängt das von der ersten Relaisstation ausgesendete Signal und wandelt es wieder in das ursprüngliche Berechtigungsprüfsignal der Frequenz von z.B. 125 kHz zurück. Das so wiederhergestellte Berechtigungsprüfsignal wird von der zweiten Relaisstation ausgesendet und von dem Schlüsselelement empfangen. Das Schlüsselelement reagiert, als ob es sich in der Nähe des Kraftfahrzeugs befindet und sendet ein Antwortsignal aus, das zum Beispiel wieder eine Frequenz von 125 kHz hat und unter normalen Umständen nur eine Reichweite von etwa 2 m aufweist. Die zweite Relaisstation nimmt dieses Antwortsignal auf, wandelt es wieder in ein Signal größerer Reichweite um und sendet dieses umgewandelte Signal aus. Das so von der zweiten Relaisstation ausgesendete Signal wird von der ersten Relaisstation empfangen und wieder in das ursprüngliche Antwortsignal umgewandelt. Das so wiederhergestellte Antwortsignal wird von der ersten Relaisstation ausgesendet, die sich in der Nähe des Kraftfahrzeuges befindet. Das Antwortsignal wird von dem Kraftfahrzeug erkannt, ohne dass bemerkt werden würde, dass die eigentlich begrenzte Reichweite vervielfacht worden ist. Die Prüfeinheit in dem Kraftfahrzeug gibt die Türöffnung oder die Berechtigung zum Starten des Motors fälschlicherweise frei.

Um Schutz gegen eine Relaisstation-Attacke zu schaffen, kann das Kraftfahrzeug z.B. ein Signal auf eine Art und Weise verschicken, die eine Verlängerung der Kommunikationsreichweite erschwert. Allerdings kann bei entsprechendem Aufwand die Reichweite jeder möglichen Informationsübertragung entsprechend vergrößert werden.

Eine andere Möglichkeit ist die Messung der Signallaufzeit, wobei die Zeit zwischen dem Aussenden des Signals zu dem Schlüsselelement und dem Wiederempfang des Antwortsignals vermessen wird. Dabei wird davon ausgegangen, dass die Aufnahme und Versendung des Signals durch die Relaisstationen der unberechtigten Nutzer Zeit zur Modulation und Demodulation des Signals etc. benötigen. Die entstehende Zeitverzögerung kann gemessen werden und als Hinweis verwendet werden, dass ein unberechtigtes Zwischenschalten stattgefunden hat. Auch hier muss aber davon ausgegangen werden, dass mit entsprechendem Aufwand Relaisstationen geschaffen werden können, die schnell genug arbeiten, dass eine Auswertung der Verzögerung mit vertretbarem Aufwand nicht mehr möglich ist.

DE 100 52 451 A1 beschreibt eine Diebstahlschutzvorrichtung mit einem Codegeber, der eine Messeinheit aufweist. Ein mit einem Betriebszustand des Kraftfahrzeugs und mit einer charakteristischen, physikalischen Größe inhärent verbundenes Signal wird mit der Messeinheit gemessen. Der Wert der gemessenen Größe wird von dem Codegeber ausgesendet und über eine fahrzeugseitige Empfangseinheit empfangen. Das empfangene Signal wird durch eine fahrzeugseitige Steuer- und Auswerteeinheit ausgewertet. Abhängig von den in dem Signal enthaltenen Informationen wird eine Sicherheitseinrichtung deaktiviert.

Ein Berechtigungsprüfverfahren mit den Merkmalen des Oberbegriffes des Anspruches 1 und ein Sicherheitssystem zur Durchführung eines Berechtigungsprüfverfahrens mit den Merkmalen des Oberbegriffes des Anspruches 8 in DE 198 50 176 C1 beschrieben.

Aufgabe der vorliegenden Erfindung ist es, ein schlüsselfreies System zu ermöglichen, dass eine verbesserte Sicherheit im Speziellen gegen Relaisstation-Attacken bietet.

Diese Aufgabe wird mit einem Berechtigungsprüfverfahren mit den Merkmalen des Anspruches 1 und ein Sicherheitssystem mit den Merkmalen des Anspruches 8 gelöst. Vorteilhafte Ausgestaltungen sind Gegenstand von Unteransprüchen. Eine besonders geeignete Verwendung ist Gegenstand des Anspruches 12.

Bei einem erfindungsgemäßen Berechtigungsprüfverfahren wird gleichzeitig und unabhängig Umgebungsinformation gleicher physikalischer Art durch zwei Elemente aufgenommen. Eines der Elemente übermittelt die von ihm aufgenommene Umgebungsinformation an das zweite Element. Die aufgenommenen Umgebungsinformationen werden vom zweiten Element verglichen. Schließlich wird entweder von dem zweiten Element oder nach Zurücksendung an das erste Element ein positives Berechtigungssignal erzeugt, wenn die aufgenommenen Umgebungsinformationen im Wesentlichen übereinstimmen.

Das erfindungsgemäße Berechtigungsprüfverfahren verwendet also externe Information, die nur dann bei beiden Elementen im Wesentlichen übereinstimmt, wenn diese sich in örtlicher Nähe zueinander befinden. Sind die beiden Elemente räumlich voneinander getrennt, so ist die Umgebung in der Regel unterschiedlich und insofern können die beiden Elemente nicht die gleiche Umgebungsinformation aufnehmen. Der Grad der geforderten Übereinstimmung kann je nach gewünschtem Sicherheitsniveau festgelegt werden.

Würde eine unberechtigte Person eine Relaisstation-Attacke starten und versuchen, die Kommunikationsreichweite zwischen den beiden Elementen zu vergrößern und eine Kommunikation zwischen den beiden Elementen zu simulieren, obwohl sie weiter auseinander sind, würde der Vergleich der beiden Umgebungsinformationen einen Unterschied ergeben und die Berechtigung verweigert werden.

Dass erste Element kann z.B. ein Kraftfahrzeug sein und das zweite Element ein Schlüsselelement. Der Vergleich wird in dem zweiten Element vorgenommen werden, das ggf. ein positives Berechtigungssignal erzeugt und an das Kraftfahrzeug zurücksendet. Die Anwendungen sind jedoch nicht auf Kraftfahrzeuge beschränkt.

Als verwertbare Umgebungsinformation kommen z.B. die Temperatur, der Geruch oder die Helligkeit in Frage. Besonders einfach zu verarbeiten und prüfen ist die Verwendung von Schallinformation. Dabei ist die Erfindung nicht auf die Verwendung von hörbarem Schall begrenzt, sondern kann auch im Infra- oder Ultraschallfrequenzbereich angewendet werden.

Eine besonders Weiterbildung verwendet akustische Information im hörbaren Frequenzbereich. Es ergibt sich zusätzliche Sicherheit dadurch, dass die berechtigte Person gegebenenfalls unberechtigt erzeugte Täuschungssignale auch hört. Wird also z.B. durch eine unberechtigte Person mit einer Relaisstation in der Nähe der berechtigten Person und damit in der Nähe des Schlüsselelements ein am ersten Element aufgenommenes akustisches Signal reproduziert um das Schlüsselelement zu täuschen, wird dadurch die berechtigte Person aufmerksam werden und gegebenenfalls entsprechende Maßnahmen einleiten. Außerdem ist mit einer Abschreckungswirkung zu rechnen, wenn eine unberechtigte Person zur Täuschung des Schlüsselelements ein Geräusch erzeugen muss und somit Aufmerksamkeit erweckt.

Eine weitere Erhöhung der Sicherheit ergibt sich, wenn das eine Element während der Aufnahme der Umgebungsinformation zusätzlich ein künstliches Signal erzeugt, das ebenfalls mit aufgenommen wird. Dazu erzeugt das eine Element eine Information, die durch die Messung messbar ist, also in seiner physikalischen Art der aufzunehmenden Umgebungsinformation entspricht. Im Falle der Verwendung akustischer Information würde das Element während der Aufnahme der Umgebungsgeräusche selbst auch ein Geräusch erzeugen, das mitverwertet wird. Nur wenn sich z.B. bei der Anwendung im automobilen Bereich das Schlüsselelement in unmittelbarer Nähe des Geräusch erzeugenden Kraftfahrzeugs befindet, wird es auch das erzeugte Geräusch aufnehmen. Das von dem Kraftfahrzeug an das Schlüsselelement gesendete Signal mit dem Geräusch wird also nur dann mit dem vom Schlüsselelement aufgenommenen Geräusch übereinstimmen, wenn sich die Elemente in Nachbarschaft befinden.

Speziell wenn akustische Information im hörbaren Frequenzbereich eingesetzt wird, bietet das Verfahren der Verwendung des von einem Element erzeugten Geräusches noch den zusätzlichen Vorteil, dass die Berechtigungsprüfung für die berechtigte Person hörbar und nachvollziehbar ist. Gerade wenn sich die berechtigte Person mit dem Schlüsselelement z.B. nicht in der Nähe des zugehörigen Kraftfahrzeugs befindet, würde eine Geräuscherzeugung in der Nähe des Schlüsselelements zur Täuschung des Schlüsselelements von der berechtigten Person gehört werden.

Die Verwendung einer künstlich erzeugten Information hat weiterhin den Vorteil, dass auch bei völligem Fehlen entsprechender Umgebungsinformation eine Berechtigungsprüfung durchgeführt werden kann. Dies ist z.B. denkbar, wenn die Berechtigungsprüfung unter Ausnutzung hörbarer Information in einer völlig ruhigen Umgebung funktionieren soll, in der keine sonstige akustische Umgebungsinformation vorhanden ist.

Das erfindungsgemäße Berechtigungsprüfverfahren kann überall dort eingesetzt werden, wo sich zwei Elemente gegenseitig erkennen müssen, um ein positives Berechtigungssignal zu erzeugen. Eines der Elemente ist tragbar, so dass es von der berechtigten Person in einer Kleidungstasche oder der Handtasche verwahrt werden kann und eine automatische Authentifizierung ermöglicht, ohne dass die berechtigte Person das entsprechende Element überhaupt in irgendeiner Weise betätigen müsste.

Besonders sicher ist das erfindungsgemäße Verfahren, da der Vergleich von dem tragbaren Element vorgenommen wird. Gerade wenn akustische Signale im hörbaren Frequenzbereich verwendet werden, wäre es dann zur Täuschung des Schlüsselelements notwendig, in der Nähe des Schlüsselelements und damit in der Nähe der berechtigten Person ein dem am Kraftfahrzeug aufgenommenen Geräusch entsprechendes Geräusch zu erzeugen. Dies würde bemerkt werden und die berechtigte Person warnen.

Ein besonders vorteilhaftes Verfahren sieht vor, dass durch eine auslösende Handlung die gleichzeitige Messung der Umgebungsinformation durch die beiden Elemente gestartet wird. Zum Beispiel bei der Verwendung für die Sicherheit eines Kraftfahrzeugs ist es besonders vorteilhaft, wenn eine Betätigung des Türgriffs ausgenutzt wird, um einen Referenzpunkt für den gleichzeitigen Start der Messung zu geben. In einem solchen Fall sendet das Kraftfahrzeug z.B. eine vorbestimmte Zeit nach der Türbetätigung ein entsprechendes Startsignal an das Schlüsselelement, so dass ein gleichzeitiger Aufnahmestart gewährleistet ist. Alternativ kann zum Beispiel auch gleich mit der Türbetätigung ein Signal versendet werden und sowohl in dem Kraftfahrzeug als auch in dem Schlüsselelement eine vorbestimmte Zeit später die gleichzeitige Messung gestartet werden.

Die Erfindung ist nicht darauf beschränkt, dass nur eine Art von Umgebungsinformation verwendet wird. Ebenso können die beiden Elemente derart ausgestaltet sein, dass sie jeweils zwei oder mehrere Umgebungsinformationen aufnehmen und wie beschrieben zur Berechtigungsprüfung vergleichen.

Das erfindungsgemäße Berechtigungsprüfverfahren kann zum Beispiel so ausgestaltet sein, dass im Falle der Übereinstimmung der Signale ein positives Berechtigungssignal erzeugt wird und im Falle der Nichtübereinstimmung ein negatives Signal. Das Signal kann dann geprüft werden und im Falle des Vorliegen eines positiven Berechtigungssignals die Berechtigung zum Beispiel zum Starten des Motors eines Kraftfahrzeuges freigegeben werden. Das Schlüsselelement erzeugt abhängig vom Vergleich der Umgebungsinformationen ein positives Berechtigungssignal oder ein negatives Signal. Das so erzeugte Signal wird an das Kraftfahrzeug gesendet, das prüfen kann, ob ein positives oder negatives Signal vorliegt. Abhängig von dieser Prüfung gibt das Kraftfahrzeug die Berechtigung zum Beispiel zum Starten des Motors frei. Im Falle der Nichtübereinstimmung wird die Startberechtigung verweigert.

Eine einfach zu realisierende andere Ausgestaltung sieht vor, dass nur im Falle der Übereinstimmung ein positives Berechtigungssignal erzeugt wird und im Falle der Nichtübereinstimmung der Vorgang abgebrochen wird. Das für den Vergleich zuständige zweite Element ist das Schlüsselelement das den Vergleich der Umgebungsinformationen durch führt. Im Falle der Übereinstimmung wird ein positives Berechtigungssignal erzeugt und an das Kraftfahrzeug zurückgesendet. Das Kraftfahrzeug kann das Vorliegen eines positiven Berechtigungssignals abprüfen und ggf. die Berechtigung zum Beispiel zum Starten des Motors freigeben. Stellt das Schlüsselelement jedoch eine Nichtübereinstimmung der gemessenen Umgebungsinformationen fest, bricht es den Vorgang ab. Es wird also kein positives Berechtigungssignal erzeugt, so dass dementsprechend auch kein positives Berechtigungssignal an das Kraftfahrzeug zurückgesendet werden kann. Da das Kraftfahrzeug kein Signal empfängt, gibt es die Berechtigung auch nicht frei.

Bei einer besonders vorteilhaften Weiterbildung umfasst das positive Berechtigungssignal Identifizierungsdaten des zweiten Elementes, die an das erste Element geschickt werden. Auf diese Weise ist eine zusätzliche Prüfung möglich, ob das zweite Element das zu dem ersten Element passende Element ist. Eine solche Ausgestaltung gibt zusätzliche Sicherheit, dass das Umgebungsinformation vergleichende zweite Element auch das zu dem ersten Element korrespondierende Element ist. Für die Anwendung im automobilen Bereich bedeutet dies, dass nach Feststellung der Berechtigungsprüfung noch einmal geprüft werden kann, ob das Schlüsselelement, das an der Berechtigungsprüfung teilgenommen hat, dasjenige Schlüsselelement ist, das zu dem entsprechenden Kraftfahrzeug korrespondiert. Dazu überprüft das Kraftfahrzeug, ob die bei dieser Ausgestaltung im Rahmen des Berechtigungsprüfsignals mit versendeten Identifikationsdaten des Schlüsselelementes mit im Kraftfahrzeug abgelegten Referenzdaten übereinstimmen.

Ein erfindungsgemäßes Sicherheitssystem zur Durchführung eines erfindungsgemäßen Berechtigungsprüfverfahrens weist zwei Elemente zur gleichzeitigen und unabhängigen Messung von Umgebungsinformation gleicher physikalischer Art auf. Eine Einrichtung zur Übermittlung der gemessenen Umgebungsinformation von einem der zwei Elemente an das andere Element ist vorgesehen. Schließlich weist das erfindungsgemäße Sicherheitssystem eine Vergleichseinrichtung zum Vergleich der durch die zwei Elemente gemessenen Umgebungsinformation und eine Einrichtung zur Erzeugung eines Berechtigungssignals in Abhängigkeit des Vergleichs auf. Das Berechtigungssignal kann dann verwendet werden, um einer so identifizierten Person, die das passende Element bei sich hat, eine Handlung zu ermöglichen, z.B. ein Auto zu öffnen oder zu starten.

Soll akustische Information als Umgebungsinformation verwertet werden, umfassen die zwei Elemente des Sicherheitssystems Mikrofone.

Soll eine künstliche Information verwertet werden, die von einem Element erzeugt wird, weist dieses Element eine Einrichtung zur Erzeugung einer der zu messenden Umgebungsinformation in seiner physikalischen Art entsprechenden künstlichen Information auf. Im Falle der Verwendung akustischer Information im hörbaren Bereich ist dies z.B. eine Geräuscherzeugungseinrichtung.

Das erfindungsgemäße Berechtigungsverfahren bzw. das erfindungsgemäße Sicherheitssystem können überall dort eingesetzt werden, wo die Prüfung der Berechtigung für eine Handlung notwendig ist, z.B. zum Öffnen einer Tür, Fahrzeugtür oder bei Zugangskontrollen etc.

Das erfindungsgemäße Berechtigungsverfahren bzw. das erfindungsgemäße Sicherheitssystem lassen sich besonders einfach und vorteilhaft zur Prüfung der Berechtigung zum Starten eines Kraftfahrzeugs einsetzen. Die gleichzeitige Aufnahme der Umgebungsinformation durch die beiden Elemente wird z.B. durch die Betätigung des Türgriffs veranlasst. Es vergeht in der Regel eine ausreichend lange Zeit, in der von beiden Elementen Umgebungsinformation aufgenommen werden kann, bis die berechtigte Person im Kraftfahrzeug Platz genommen hat und versucht, das Kraftfahrzeug zu starten. Nur wenn die Berechtigungsprüfung positiv verlaufen ist und ein positives Berechtigungssignal erzeugt worden ist, wird der Startvorgang durchgeführt. Ansonsten wird das Starten des Motors verhindert.

Die Erfindung wird anhand einer Ausgestaltung des erfindungsgemäßen Verfahrens unter Bezugnahme auf die beiliegenden Figuren im Detail erläutert. Dabei zeigen:
- Fig. 1A und 1B: zwei Abschnitte eines Ablaufdiagramms einer Ausgestaltung einer erfindungsgemäßen Berechtigungsprüfung,
- Fig. 2A und 2B: zwei Abschnitte eines Ablaufdiagramms einer weiteren Ausgestaltung einer erfindungsgemäßen Berechtigungsprüfung.

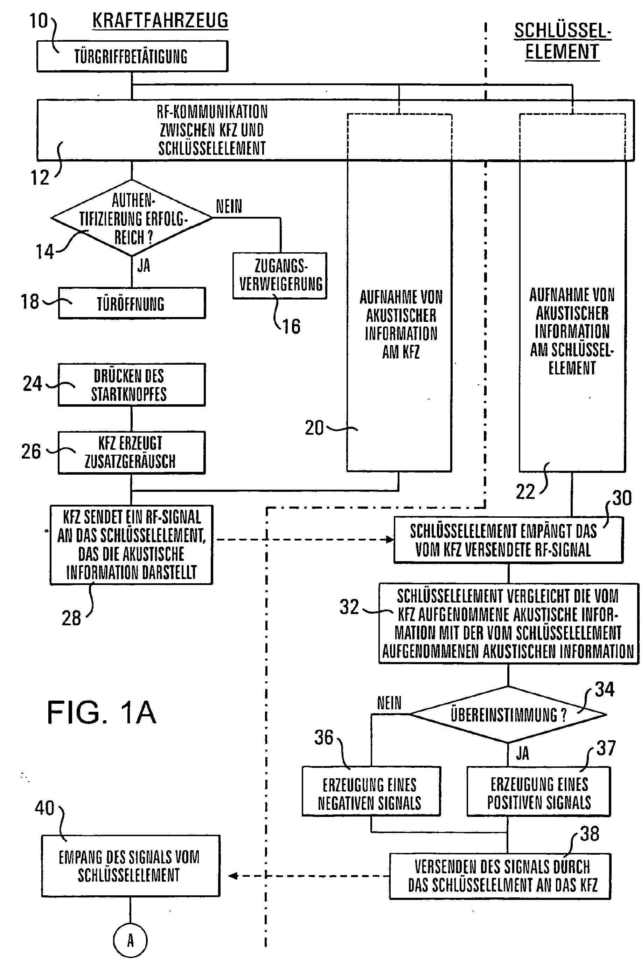

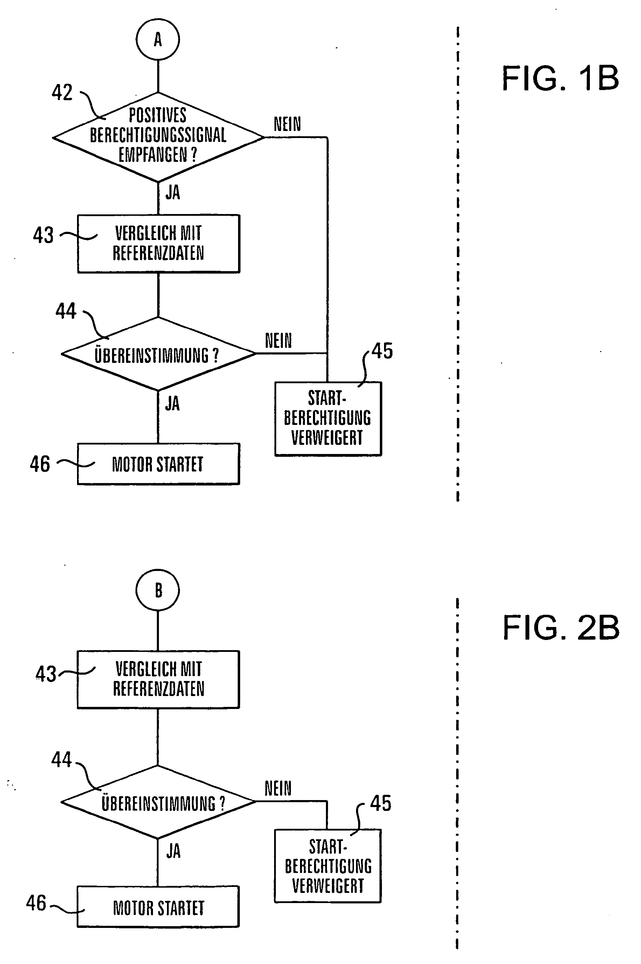

Das Ablaufdiagramm der Fig. 1 zeigt ein Beispiel des Ablaufes bei der Berechtigungsprüfung vor dem Starten des Motors eines Kraftfahrzeugs, wobei Fig. 1B die Fortsetzung der Fig. 1A am Punkt A darstellt. Der linke Teil stellt die Handlungen auf Seiten des Kraftfahrzeuges dar und der rechte Teil zeigt die Handlungen des Schlüsselelementes. Das Verfahren dieser Ausgestaltung dient der Erhöhung der Sicherheit bei Anwendungen, bei denen der berechtigte Nutzer keinen Schlüssel mechanisch in irgendeiner Weise betätigen soll.

Kraftfahrzeug und Schlüsselelement verfügen jeweils über Radiofrequenzsende- und Empfangseinrichtungen zur Kommunikation miteinander. Außerdem weisen beide Elemente Mikrofone auf. Das Zusammenwirken der einzelnen Komponenten und er dazu notwendigen Elektronik ergibt sich aus der folgenden Schilderung des Ablaufes.

Bei Schritt 10 betätigt der berechtigte Nutzer, der das Schlüsselelement bei sich trägt, den Türgriff des Kraftfahrzeugs. Eine erste Radiofrequenzkommunikation zwischen dem Kraftfahrzeug und dem Schlüsselelement bei Schritt 12 dient in an sich bekannter Weise der Vorabauthentifizierung. Das Kraftfahrzeug sendet dazu z.B. ein Radiofrequenzsignal an das Schlüsselelement, das seinerseits daraufhin ein Signal an das Kraftfahrzeug zurücksendet. Nur wenn dieses Signal bei Schritt 14 von dem Kraftfahrzeug erkannt wird und insofern die Authentifizierung erfolgreich ist, wird in Schritt 18 die Tür geöffnet. Ansonsten würde gemäß Schritt 16 der Zugang verweigert. Bei diesem Teil des Verfahrens dieser Ausgestaltung handelt es sich nur um eine Prüfung niedriger Sicherheitsstufe zur Feststellung der Türöffnungsberechtigung, die nicht gegen Relaisstation-Attacken geschützt ist.

Gleichzeitig mit der Radiofrequenzkommunikation 12 zwischen Kraftfahrzeug und Schlüsselelement oder eine definierte Zeit danach startet gemäß Schritt 20 jedoch ein Aufnahmegerät am oder im Kraftfahrzeug mit der Aufnahme der Umgebungsgeräusche über ein entsprechendes Mikrofon.

Zum selben Zeitpunkt startet im Schlüsselelement ein Aufnahmegerät die Aufnahme der Umgebungsgeräusche mit einem entsprechenden Mikrofon, Schritt 22.

Nachdem die berechtigte Person im Kraftfahrzeug Platz genommen hat, drückt es den Startknopf, um den Motor zu starten, Schritt 24. Daraufhin erzeugt das Kraftfahrzeug in Schritt 26 ein zusätzliches künstliches Geräusch mit einer dafür vorgesehenen Einrichtung. Dieses künstliche Geräusch wird sowohl vom Aufnahmegerät im Kraftfahrzeug als auch vom Aufnahmegerät im Schlüsselelement aufgenommen.

Kurz nach der Erzeugung des zusätzlichen Geräusches sendet das Kraftfahrzeug in Schritt 28 ein Signal an den Schlüssel, das die von dem Kraftfahrzeug während Schritt 20 aufgenommene akustische Information darstellt. Das Signal kann auch verschlüsselt sein. In Schritt 30 empfängt das Schlüsselelement das von dem Kraftfahrzeug versendete Signal mit der von dem Kraftfahrzeug aufgenommenen akustischen Information. In Schritt 32 vergleicht das Schlüsselelement die akustische Information, die von dem Kraftfahrzeug aufgenommen worden ist, mit der akustischen Information, die es selbst aufgenommen hat. Gemäß Schritt 34 wird bei Übereinstimmung ein positives Berechtigungssignal in Schritt 37 erzeugt. Im Falle der Nichtübereinstimmung würde ein negatives Signal erzeugt. Das Signal wird in Schritt 38 versendet und vom Kraftfahrzeug in Schritt 40 empfangen. Unter Schritt 42 wird abgefragt, ob ein positives Berechtigungssignal vorliegt, und insofern die Authentifizierung erfolgreich war. Liegt kein entsprechendes Signal vor, würde unter Schritt 45 die Startberechtigung verweigert. Bei der dargestellten Ausgestaltung des erfindungsgemäßen Verfahrens umfasst das positive Signal Identifikationsdaten des Schlüsselelementes. Im Falle des Vorliegens eines positiven Berechtigungssignals überprüft das Kraftfahrzeug in Schritt 43 zusätzlich, ob die in dem positiven Berechtigungssignal enthaltenen Identifizierungsdaten mit Referenzdaten übereinstimmen, die in einem Speicher des Kraftfahrzeuges abgelegt sind. So ist sichergestellt, dass an der bisherigen Berechtigungsprüfung ein und dasselbe Schlüsselelement teilgenommen hat und dass dieses Schlüsselelement zu dem Kraftfahrzeug gehört.

Im Falle der Übereinstimmung der mit dem positiven Berechtigungssignal übersendeten Identifikationsdaten mit den Referenzdaten, Schritt 44, wird unter Schritt 46 die Motorstartberechtigung freigegeben. Im Falle der Nichtübereinstimmung der Identifikationsdaten mit den Referenzdaten wird gemäß Schritt 45 die Startberechtigung verweigert.

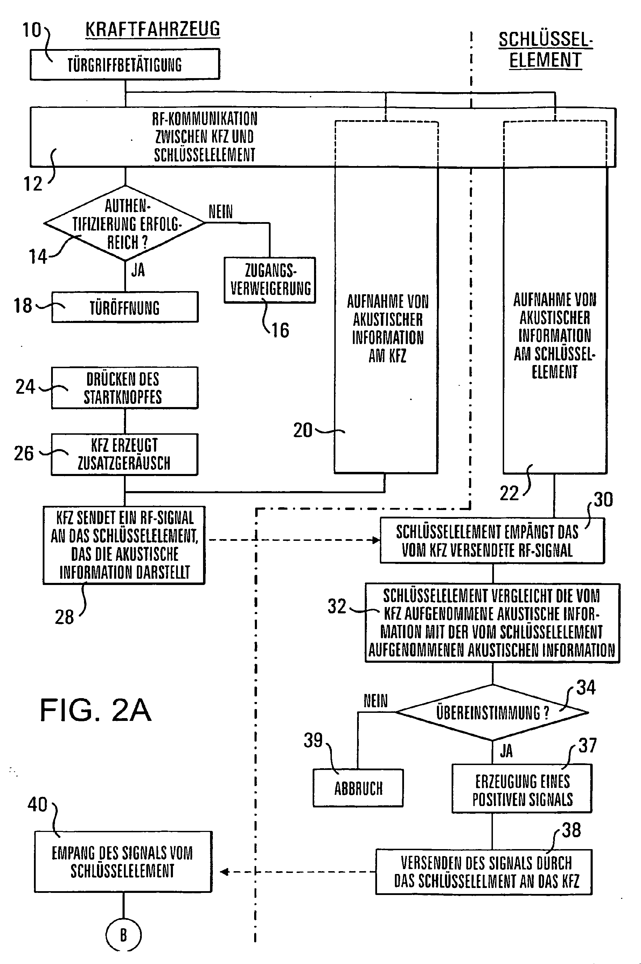

Fig. 2 zeigt eine andere Ausgestaltung des erfindungsgemäßen Berechtigungsprüfverfahrens. Fig. 2B ist die Fortsetzung der Fig. 2A am Punkt B. Wiederum stellt der linke Teil die Handlungen auf Seiten des Kraftfahrzeuges dar und der rechte Teil zeigt die Handlungen des Schlüsselelementes.

Bis zum Schritt 24, in dem geprüft wird, ob die vom Kraftfahrzeug und vom Schlüsselelement aufgenommene Umgebungsinformation übereinstimmen, entspricht diese Ausgestaltung der Ausgestaltung, die Gegenstand der Fig. 1 ist. Wie auch bei der oben beschriebenen Ausgestaltung wird gemäß Schritt 34 bei Übereinstimmung der Signale ein positives Berechtigungssignal erzeugt, Schritt 37. Im Falle der Nichtübereinstimmung wird gemäß Schritt 39 das Verfahren abgebrochen.

Das gegebenenfalls erzeugte positive Berechtigungssignal wird in Schritt 38 versendet und vom Kraftfahrzeug in Schritt 40 empfangen. Nur wenn die Prüfung unter Schritt 34 positiv verlaufen ist, kann das Kraftfahrzeug also überhaupt ein Signal empfangen. Ansonsten passiert auf Seiten des Kraftfahrzeuges nichts. Insbesondere wird auch keine Startberechtigung gegeben. Wie auch bei der oben geschilderten Ausgestaltung besteht das positive Berechtigungssignal aus Identifikationsdaten des Schlüsselelementes oder umfasst zumindest solche Daten. Diese Identifikationsdaten werden in Schritt 43 mit in einem Speicher des Kraftfahrzeugs abgelegten Referenzdaten verglichen. Wie auch bei der Ausgestaltung, die mit Bezug zu Fig. 1 geschildert ist, wird abhängig von diesem Vergleich die Startberechtigung gegeben oder verweigert.

Bei den geschilderten Ausgestaltungen erzeugt das Kraftfahrzeug in Schritt 26 nach dem Drücken des Startknopfes in Schritt 24 ein Zusatzgeräusch. Bei Abwandlungen kann vorgesehen sein, dass die Erzeugung des Zusatzgeräusches bereits im Vorhinein eine definierte Zeit nach der Türöffnung unter Schritt 18 bzw. eine definierte Zeit nach der Radiofrequenzkommunikation zwischen Kraftfahrzeug und Schlüsselelement unter Schritt 12 ausgelöst wird, ohne dass dazu ein vorheriges Drücken des Startknopfes notwendig wäre.

Schließlich kann in Abwandlung der geschilderten Ausführungsformen vorgesehen sein, dass das Drücken des Startknopfes erst zu einem späteren Zeitpunkt, zum Beispiel am Ende des Berechtigungsprüfverfahrens vorgesehen ist.

Die beschriebenen Verfahren bzw. Systeme schützen gegen Relaisstation-Attacken. Angenommen die berechtigte Person mit dem Schlüsselelement hat das Kraftfahrzeug verlassen und befindet sich in einer Entfernung größer als die normale Kommunikationsreichweite von Kraftfahrzeug und Schlüsselelement. Betätigt eine unberechtigte Person den Türgriff, versucht das Kraftfahrzeug zunächst gemäß den Schritten 12, 14 ein Schlüsselelement in der näheren Umgebung zu authentifizieren. Verfügt die unberechtigte Person nicht über die Ausrüstung zur Durchführung einer Relaisstation-Attacke, schlägt diese Authentifizierung fehl und die Tür bleibt verschlossen, 16.

Besitzt die unberechtigte Person jedoch entsprechende Ausrüstung in Form einer Relaisstation, wird das von dem Kraftfahrzeug im Rahmen des Schrittes 12 versendete Radiofrequenzsignal von der Relaisstation der unberechtigten Person aufgenommen und an eine zweite Relaisstation in größerer Entfernung gesendet, die sich in der Nähe der berechtigten Person mit dem Schlüsselelement befindet. Die zweite Relaisstation sendet das Signal an das Schlüsselelement, das von diesem fälschlicherweise als direkt vom Kraftfahrzeug versendet angenommen wird. Das Schlüsselelement erzeugt sein Authentifizierungssignal, das von der zweiten Relaisstation aufgenommen und über die größere Entfernung wieder zurück an die erste Relaisstation gesendet wird. Diese gibt das Signal schließlich wieder an das Kraftfahrzeug aus, das das empfangene Signal fälschlicherweise als direkt von dem Schlüsselelement kommend identifiziert und die Tür öffnet. Die Prüfung bei den Schritten 12, 14 hat also zunächst zu einem unerwünschten Ergebnis geführt.

Gleichzeitig mit der Radiofrequenzkommunikation 12 zwischen dem Kraftfahrzeug und dem Schlüsselelement startet jedoch sowohl das Kraftfahrzeug als auch das Schlüsselelement die Aufnahme der akustischen Umgebungsinformation, 20, 22.

Die unberechtigte Person steigt in das Kraftfahrzeug ein und drückt den Startknopf, 24. Gemäß Schritt 26 erzeugt das Kraftfahrzeug jetzt ein zusätzliches Geräusch, das auch durch das Mikrofon das Kraftfahrzeugs aufgenommen wird. Das von dem Mikrofon des Kraftfahrzeugs aufgenommene akustische Signal umfasst dementsprechend die akustische Information, die während der Aufnahmezeit in der Umgebung des Fahrzeugs geherrscht hat und die akustische Information des Zusatzgeräuschs. Aus dieser akustischen Information wird ein Signal erzeugt, das gemäß Schritt 28 von dem Kraftfahrzeug ausgesendet wird. Das Schlüsselelement befindet sich jedoch im beschriebenen Missbrauchsfall nicht in der Nähe des Kraftfahrzeugs, da die berechtigte Person sich von dem Kraftfahrzeug entfernt hatte. Das Schlüsselelement kann das Signal des Kraftfahrzeugs also in der Regel aufgrund der begrenzten Reichweite des Signals nicht direkt empfangen. Die unberechtigte Person versucht jetzt eine Relaisstation-Attacke um dennoch eine positive Berechtigung zu erhalten. Das von dem Kraftfahrzeug versendete Signal wird dazu von der unberechtigten Person mit einem entsprechenden Relaisstation aufgenommen und nach entsprechender Modulation mit größerer Reichweite an eine zweite Relaisstation geschickt, die sich in der Nähe des Schlüsselelements, z.B. bei einer zweiten unberechtigten Person befindet. Das zweite Gerät demoduliert das Signal und sendet es an das Schlüsselelement. Das von dem Schlüsselelement empfangene Signal trägt die akustische Umgebungsinformation des Kraftfahrzeugs zusammen mit der in Schritt 26 erzeugten künstlichen akustischen Zusatzinformation. Da sich das Schlüsselelement jedoch nicht in der Umgebung des Kraftfahrzeugs befindet, hat es in Schritt 22 eine andere akustische Information aufgenommen, nämlich die seiner eigenen Umgebung. Der Vergleich 32 der per Radiofrequenz übermittelten (28) Information mit der selbst aufgenommenen Information führt in dem Schlüsselelement bei Schritt 34 also zu einem negativen Ergebnis. Es wird kein positives Berechtigungssignal erzeugt (36, 39).

Die unberechtigten Personen könnten auch versuchen, wie folgt das Sicherheitssystem zu umgehen. Nachdem wie beschrieben die zweite Relaisstation bei der zweiten unberechtigten Person das Signal der ersten Relaisstation der ersten unberechtigten Person erhalten hat, das die akustische Umgebungsinformation des Kraftfahrzeugs enthält, kann die zweite Relaisstation aus diesem Signal wiederum ein akustisches Signal erzeugen, das dann von dem Schlüsselelement aufgenommen wird. Fälschlicherweise könnte das Schlüsselelement dieses Signal als seine eigene Umgebungsinformation interpretieren. Allerdings würde die berechtigte Person, die sich im Besitz des Schlüsselelements befindet, das akustische Signal bemerken und könnte die entsprechenden Maßnahmen ergreifen. Außerdem schreckt die Notwendigkeit der Erzeugung lauter Geräusche in der Umgebung der berechtigten Person die unberechtigten Personen ab.

Der Effekt kann noch verstärkt werden, wenn die Aufnahme durch das Kraftfahrzeug innerhalb des Kraftfahrzeugs vorgenommen wird. Dann ist die akustische Umgebung des Mikrofons des Kraftfahrzeugs gedämpft. Unberechtigte Personen müssten also zur Täuschung des Schlüsselelements äußere Geräusche von dem Schlüsselelement fernhalten oder an oder in dem Kraftfahrzeug laute Geräusche erzeugen, die die akustische Umgebung des Schlüsselelements überdecken könnten. Dies würde allerdings wiederum die Aufmerksamkeit der Umgebung erregen.

Das erfindungsgemäße Berechtigungsprüfverfahren bzw. das erfindungsgemäße Sicherheitssystem nützen Umgebungsinformation, die bereits vorhanden ist und nicht notwendigerweise künstlich erzeugt werden muss. Wenn unberechtigte Personen versuchen, die Umgebungsinformation zu ändern und das System so zu beeinflussen, wird dies speziell bei Verwendung akustischer Information bemerkt werden und macht den Angriff für die unberechtigten Personen sehr gefährlich.

## Patentansprüche

1. Berechtigungsprüfverfahren mit folgenden Schritten
gleichzeitige und unabhängige Messung (20, 22) von Umgebungsinformation gleicher physikalischer Art durch zwei Elemente, von denen eines tragbar ist,
Übermitteln (28, 30) der von einem ersten der zwei Elemente gemessenen Umgebungsinformation an das zweite Element,
Vergleichen (32, 34) der gemessenen Umgebungsinformationen durch das zweite Element,
Erzeugen eines positiven Berechtigungssignals (37), falls die gemessenen Umgebungsinformationen im Wesentlichen übereinstimmen,
**dadurch gekennzeichnet,**
**dass** die Prüfung der Übereinstimmung (32, 34) in dem tragbaren Element durchgeführt wird.

2. Berechtigungsprüfverfahren nach Anspruch 1, bei dem als Umgebungsinformation ein akustisches Signal, vorzugsweise im hörbaren Frequenzbereich gemessen wird.

3. Berechtigungsprüfverfahren nach einem der Ansprüche 1 oder 2, bei dem eines der zwei Elemente bei der Messung eine künstliche, mit der Messung messbare Information erzeugt (26) und ein positives Berechtigungssignal nur dann erzeugt wird, wenn das andere Element bei der Messung die künstliche Information misst.

4. Berechtigungsprüfverfahren nach einem der Ansprüche 1 bis 3, bei dem die gleichzeitige Messung (20, 22) der Umgebungsinformation durch eine Türbetätigung (10) derart veranlasst wird, dass gleich oder eine vorbestimmte Zeit nach der Türbetätigung die gleichzeitige Messung beginnt.

5. Berechtigungsprüfverfahren nach einem der Ansprüche 1 bis 4, bei dem im Fall der Nicht-Übereinstimmung der gemessenen Umgebungsinformationen kein Signal erzeugt wird und das Verfahren abgebrochen wird (39).

6. Berechtigungsprüfverfahren nach einem der Ansprüche 1 bis 5, bei dem das positive Berechtigungssignal Identifizierungsdaten des tragbaren, zweiten Elementes umfasst, die an das erste Element geschickt werden (38).

7. Berechtigungsprüfverfahren nach Anspruch 6 bei dem das erste Element einen Vergleich (43) der Identifizierungsdaten des zweiten Elementes mit gespeicherten Referenzdaten vornimmt.

8. Sicherheitssystem zur Durchführung eines Berechtigungsprüfverfahrens, mit
zwei Elementen zur gleichzeitigen und unabhängigen Messung (20, 22) von Umgebungsinformation gleicher physikalischer Art, von denen eines tragbar ist,
einer Einrichtung zur Übermittlung (28, 30) der gemessenen Umgebungsinformation von einem der Elemente an das andere Element,
einer Vergleichseinrichtung zum Vergleich (32, 34) der durch die zwei Elemente gemessenen Umgebungsinformation und
einer Einrichtung zur Erzeugung (37) eines positiven Berechtigungssignals in Abhängigkeit des Vergleiches
**dadurch gekennzeichnet,**
**dass** die Vergleichseinrichtung in dem tragbaren Element vorgesehen ist.

9. Sicherheitssystem nach Anspruch 8, bei dem die zwei Elemente Mikrofone umfassen.

10. Sicherheitssystem nach einem der Ansprüche 8 oder 9, bei dem ein Element eine Einrichtung zur Erzeugung (26) einer der zu messenden Umgebungsinformation in seiner physikalischen Art entsprechenden künstlichen Information umfasst.

11. Sicherheitssystem nach den Ansprüchen 9 und 10, bei dem die Einrichtung zur Erzeugung (26) der künstlichen Information zur Erzeugung eines akustischen Signals ausgestaltet ist.

12. Verwendung des Berechtigungsprüfverfahrens nach einem der Ansprüche 1 bis 7 oder eines Sicherheitssystems nach einem der Ansprüche 8 bis 11 zur Prüfung der Berechtigung zum Starten eines Kraftfahrzeuges.

## Claims

1. An authorization checking method comprising the following steps
simultaneous and independent measurement (20, 22) of environmental information of the same physical type by two elements, of which one is portable;
transmission (28, 30) of the environmental information measured by a first of the two elements to the second element;
comparison (32, 34) of the measured environmental information by the second element;
generation of a positive authorization signal (37) if the environmental information measured substantially coincides, **characterized in that** the examination of the coincidence (32, 34) is carried out in the portable element.

2. An authorization checking method in accordance with claim 1, wherein an acoustic signal, preferably in the audible frequency range, is measured as the environmental information.

3. An authorization checking method in accordance with one of claims 1 or 2, wherein one of the two elements generates an artificial piece of information (26) which is measurable by the measurement and a positive authorization signal is only generated when the other element measures the artificial piece of information in the measurement.

4. An authorization checking method in accordance with any one of the claims 1 to 3, wherein the simultaneous measurement (20, 22) of the environmental information is initiated by a door actuation (10) such that the simultaneous measurement starts immediately or a pre-determined time after the door actuation.

5. An authorization checking method in accordance with any one of the claims 1 to 4, wherein no signal is generated and the procedure is aborted (39) in the case of the non-coincidence of the environmental information measured.

6. An authorization checking method in accordance with any one of the claims 1 to 5, wherein the positive authorization signal includes identification data of the second element which are sent to the first element (38).

7. An authorization checking method in accordance with claim 6, wherein the first element carries out a comparison (43) of the identification data of the second element with stored reference data.

8. A security system to carry out an authorization checking method comprising
two elements for the simultaneous and independent measurement (20, 22) of environmental information of the same physical type, one of the elements being portable;
a device for the transmission (28, 30) of the measured environmental information from one of the elements to the other element,
a comparison device for the comparison (32, 34) of the environmental information measured by the two elements; and
a device for the generation (37) of a positive authorization signal in dependence on the comparison,
**characterized in that** the comparison device is provided in the portable element.

9. A security system in accordance with claim 8, wherein the two elements include microphones.

10. A security system in accordance with one of claims 8 or 9, wherein an element includes a device for the generation (26) of an artificial piece of information corresponding to the environmental information to be measured in its physical type.

11. A security system in accordance with claim 9 and claim 10, wherein the device for the generation (26) of the artificial piece of information is designed for the generation of an acoustic signal.

12. Use of the authorization checking method in accordance with any one of the claims 1 to 7 or of a security system in accordance with any one of the claims 8 to 11 for the check of the authorization to start a motor vehicle.

## Revendications

1. Procédé de contrôle d'authentification, comprenant les étapes suivantes :
- mesure simultanée et indépendante (20, 22) d'informations environnementales de même nature physique par deux éléments, dont un est un élément portatif,
- transmission (28, 30) de l'information environnementale mesurée par un premier des deux éléments au second élément,
- comparaison (32, 34), par le second élément, des informations environnementales mesurées,
- génération d'un signal d'authentification positif (37), si les informations environnementales mesurées sont, pour l'essentiel, concordantes,
**caractérisé en ce que**
le contrôle de la concordance (32, 34) est effectué dans l'élément portatif.

2. Procédé de contrôle d'authentification selon la revendication 1, dans lequel, parmi les informations environnementales, on mesure un signal acoustique, de préférence un signal de la plage des fréquences audibles.

3. Procédé de contrôle d'authentification selon l'une des revendications 1 ou 2, dans lequel l'un des deux éléments produit, lors de la mesure, une information artificielle (26) qui peut être mesurée lors de cette mesure, et ne génère un signal d'authentification positif que lorsque l'autre élément mesure l'information artificielle pendant la mesure.

4. Procédé de contrôle d'authentification selon l'une des revendications 1 à 3, dans lequel la mesure simultanée (20, 22) des informations environnementales est déclenchée par un actionnement d'une portière (10) de manière telle que la mesure simultanée commence immédiatement ou au bout d'un temps prédéterminé après l'actionnement de la portière.

5. Procédé de contrôle d'authentification selon l'une des revendications 1 à 4, dans lequel, en cas de non-concordance des informations environnementales mesurées, aucun signal n'est généré, et la procédure est abandonnée (39).

6. Procédé de contrôle d'authentification selon l'une des revendications 1 à 5, dans lequel le signal d'authentification positif contient des données d'identification du second élément portatif, qui sont retransmises au premier élément (38).

7. Procédé de contrôle d'authentification selon la revendication 6, dans lequel le premier élément effectue une comparaison (43) des données d'identification du second élément avec des données de référence mémorisées.

8. Système de sécurité permettant de mettre en oeuvre un procédé de contrôle d'authentification, comprenant
- deux éléments permettant une mesure simultanée et indépendante (20, 22) d'informations environnementales de même nature physique, l'un des éléments étant portatif,
- un dispositif de transmission (28, 30) des informations environnementales mesurées, d'un des éléments à l'autre élément,
- un dispositif comparateur permettant de comparer (32, 34) les informations environnementales mesurées par les deux éléments, et
- un dispositif de génération (37) d'un signal d'authentification positif en fonction du résultat de la comparaison,
**caractérisé en ce que** le dispositif comparateur est compris dans l'élément portatif.

9. Système de sécurité selon la revendication 8, dans lequel les deux éléments comportent des microphones.

10. Système de sécurité selon l'une des revendications 8 ou 9, dans lequel l'un des éléments comprend un dispositif de génération (26) d'une information artificielle dont la nature physique correspond à celle de l'information environnementale à mesurer.

11. Système de sécurité selon les revendications 9 et 10, dans lequel le dispositif de génération (26) de l'information artificielle est équipé pour générer un signal acoustique.

12. Utilisation d'un procédé de contrôle d'authentification selon l'une des revendications 1 à 7, ou d'un système de sécurité selon l'une des revendications 8 à 11, en vue de vérifier l'autorisation de démarrage d'un véhicule automobile.
